## Europäisches Patentamt
## European Patent Office
## Office européen des brevets

(19)

(11) Veröffentlichungsnummer: **0 000 687**
**B1**

(12) **EUROPÄISCHE PATENTSCHRIFT**

(45) Veröffentlichungstag der Patentschrift: **16.09.81**

(51) Int. Cl.³: **B 01 D 13/04, C 08 J 9/26**

(21) Anmeldenummer: **78810003.0**

(22) Anmeldetag: **20.06.78**

(54) Verfahren zur Herstellung einer mikroporösen Membran für Filtrationsanlagen.

(30) Priorität: **15.07.77 CH 8765/77**

(43) Veröffentlichungstag der Anmeldung:
**07.02.79 Patentblatt 79/3**

(45) Bekanntmachung des Hinweises auf die Patenterteilung:
**16.09.81 Patentblatt 81/37**

(84) Benannte Vertragsstaaten:
**BE DE FR GB LU NL SE**

(56) Entgegenhaltungen:
**DE - A - 2 133 848**
**GB - A - 727 679**
**GB - A - 1 078 895**
**GB - A - 1 099 676**
**GB - A - 1 113 349**
**US - A - 3 281 511**

**RESEARCH DISCLOSURE, no. 135, Juli 1975,**
**Havant**
**"Process for making microporous membranes",**
**Seiten 74—75**

(73) Patentinhaber: **KILCHER-CHEMIE AG**
**Steinackerweg 19**
**CH-4565 Recherswil (CH)**

(72) Erfinder: **Proelss, Ludwig**
**Grederstrasse 62/5**
**CH-4512 Bellach (CH)**

(74) Vertreter: **Seehof, Michel et al,**
**c/o AMMANN PATENTANWAELTE AG BERN**
**Schwarztorstrasse 31**
**CH-3001 Bern (CH)**

Courier Press, Leamington Spa, England.

Verfahren zur Herstellung einer mikroporösen Membran für Filtrationsanlagen

Die Erfindung betrifft ein Verfahren zur Herstellung einer mikroporösen Membran für Filtrationsanlagen, wobei in einem Kunststoff oder Kunststoffvorprodukt feinteilige, darin unlösliche Partikel eingemischt und senkrecht zur Oberfläche ausgerichtet und nach Erreichen der endgültigen Lage herausgelöst werden, wobei sich eine Fliessstruktur mit kanalförmigen Hohlräumen bildet. Bei Verwendung von Hohlfasern als Partikel erübrigt sich dabei das Herauslösen. Solche Membrane sind zur Ultrafiltration von wässrigen Medien, zur Umkehrosmose und zur Dialyse verwendbar.

Unter Ultrafiltration versteht man in der Regel die Abtrennung von Kolloidteilchen bei mässigem Ueberdruck, während unter Umkehrosmose die Aufgabe verstanden wird, bedeutend kleinere, nämlich echt gelöste Teilchen unter hohem Druck vom Lösungsmittel zu trennen, bzw. aufzukonzentrieren.

Die Membran bildet das Kernstück einer Filtrationsanlage. Ihre Eigenschaften bestimmen mit, ob diese genügend leistungs- und konkurrenzfähig ist. Eine gute Membran soll folgende Eigenschaften aufweisen:

1) Sie soll bei mässigem Aufgabedruck eine möglichst hohe Filterleistung erbringen (Definition: cm³ Filtrat/cm² . bar . Std.; Temperatur);

2) sie soll eine möglichst gleichförmige Porenweite haben mit scharfer Abgrenzung nach oben und unten. Zu enge Poren beeinträchtigen die Filterleistung, zu weite führen zum Durchbruch von unerwünschten Partikeln;

3) die Poren sollen möglichst glatt sein (Kapillarstruktur) und scharfkantig zur Filterfläche ausmünden. Solche Membranen weisen geringen Druckverlust auf und sind wenig verstopfungsanfällig.

4) Die Membran soll in einem weiten pH-Bereich beständig sein. Sie soll nicht dem mikrobiellen Abbau unterliegen, soll inert sein gegen eine möglichst hohe Anzahl von Chemikalien, unempfindlich gegen erhöhte Arbeitstemperatur, erhöhte Drucke und Vibration.

5) Die Membran soll nach Möglichkeit trocken gelagert werden können, ohne dass die Filterleistung nachlässt.

6) Da Wasseraufnahme, Polarität und Benetzungswinkel des Membranpolymers die Trennselektivität und den Durchgangswiderstand beeinflussen, sollten diese frei wählbar für den jeweiligen Verwendungszweck sein;

7) sie soll nach einem Verfahren herstellbar sein, welches auch im Produktionsmassstab gut beherrschbar ist und eine enge Klassifizierung mit geringer Ausschussquote zulässt.

Vorbekannte leistungsfähige Membranen bestehen überwiegend aus einer asymmetrisch aufgebauten, porösen Schicht aus Kunststoff wie Zelluloseazetat, Polyamid, Polyacrylnitril, usw. Man erzeugt sie, indem man kompliziert zusammengesetzte Kunststofflösungen zu einer Schicht ausgiesst, durch Verdunstung oder Fällung eine glatte engporige "aktive" Oberseite erzielt und die unmittelbar darunter befindliche Schicht durch Koagulation mit geeigneten Medien zu einer relativ grobporigen Stützschicht ausbildet. Solche Membranen besitzen zur Zeit einen hohen Entwicklungsstand.

Ihre Nachteile: Porenweite, Porenweitenverteilung und Dicke der aktiven Schicht unterliegen einer Vielzahl von Einflussgrössen, von denen nur
Art und Konzentration des Polymers,
Art und Konzentration der Quellmittel,
Art und Konzentration der Lösungsmittel,
Art und Konzentration des Fällmittels,
Reifungsgrad der Lösung,
Schichtdicke, Temperatur, Luftfeuchtigkeit, Luftgeschwindigkeit und Anlasstemperatur genannt sein sollen.

Ausserdem ist die Anzahl der Polymeren, die sich zur Herstellung asymmetrischer Membranen eignet, begrenzt. Der Hersteller ist daher nicht unbedingt in der Lage, eine Membransubstanz vorzusehen, die sich aufgrund z.B. der gewünschten Chemikalienresistenz, der Benetzungsfähigkeit und der mechanischen Eigenschaften am besten für den vorgesehenen Zweck eignen würde.

Ausserdem sind Filterschichten bekannt, welche durch limitiertes Sintern (Brennen) von Metall-Keramik, Kohlenstoff- oder Kunststoffpulvern hergestellt sind. Häufig wird die dem Filtergut zugewendete Seite noch mit einer feinporigen Sinter- oder Anschwemmschicht versehen (sogenannte zusammengesetzte Membranen). Auch diese Membranen entsprechen nicht optimal den vorgenannten Ansprüchen. Die Fliesslinie eines gedachten Flüssigkeitsteilchens durch die Trennschicht ist stark verzweigt, wodurch ein hoher Durchgangswiderstand entsteht.

Aus der DE - OS 2 133 848 ist ein Verfahren zur Herstellung eines porösen Polytetrafluoräthylenbandes bekannt, wobei Metall- oder Glasfasern einem Kunststoff beigemischt und durch Druck zu einem Barren geformt werden, wodurch die Fasernbevorzugt senkrecht zur Druckrichtung, also radial, ausgerichtet werden. Durch Schälen erhält man eine dünne Folie, worin auch Fasern im wesentlichen senkrecht zur Folienoberfläche ausgerichtet sind, die dann teilweise herausgespült werden. Insbesondere die Abschälphase ist jedoch recht schwierig durchzuführen und für eine industrielle Herstellung der eingangs erwähnten mikroporösen Membrane zu kostspielig.

Es ist demgegenüber Aufgabe der vorliegenden Erfindung, eine mikroporöse Membran herzustellen, die die eingangs erwähnten Bedingungen erfüllt und die beschriebenen Nachteile der vorbekannten Mebranen nicht aufweist. Das Verfahren, das diese Aufgabe löst, ist dadurch gekennzeichnet, dass die zur Herstellung der Membran dienende Mischung im fliessfähigen Zustand zu einer dünnen Schicht geformt wird und die Partikel im wesentlichen senkrecht zur Schichtoberfläche ausgerichtet werden und dass nach dem Verfestigen der Schicht die Partikel unter Bildung einer Fliessstruktur mit kanalförmigen Hohlräumen herausgelöst werden. Falls als Partikel Hohlfasern verwendet werden, erübrigt sich dabei das Herauslösen.

Die Erfindung wird nun anhand einer beispielsweisen Zeichnung und von Ausführungsbeispielen näher erläutert werden. Es zeigen, rein schematisch,

die Figuren 1 und 2 zwei Verfahrenszustände bei der Herstellung einer Umkehr-Sinterschicht,

die Figuren 3 bis 5 drei aufeinander folgende Verfahrenszustände gemäss der Erfindung anhand von Schnitten einer Membran, und

Figur 6 einen Schnitt einer nach einem weiteren erfindungsgemässen Verfahren hergestellten Membran.

Dem vorgesehenen Kunststoff werden trocken, per Extruder, Mischwalzwerk, oder nass, durch Einrühren in Kunststofflösungen oder in niedrigmolekulare Kunststoffvorprodukte, feinpulvrige feste Partikel in hoher Konzentration zugesetzt. Anschliessend wird aus diesem Material eine Schicht geformt und werden die Partikel ausgerichtet, solange der Kunststoffanteil plastisch, bzw. fliessfähig ist. Dann wird die Schicht gehärtet und weiterbehandelt, um darin eine Fliessstruktur zu erhalten.

Die Partikel müssen folgende Anforderungen erfüllen:

1) Ihre Konzentration muss nahe der von einem Teil Bindemittel zu einem Teil Füllstoff liegen: sie sollen sich im Polymer berühren;

2) sie müssen feinteilig sein, schmale Korngrössenverteilung aufweisen und annähernd runde oder stäbchenförmige Struktur besitzen;

3) sie müssen im Kunststoff und dem dafür verwendeten Lösungsmittel unlöslich sein;

4) sie sollen durch die nachgenannten Methoden im Bindemittel orientierbar sein;

5) sie sollen durch Wasser, Säuren oder andere Agenzien extrahierbar sein, falls es sich nicht um Hohlfasern handelt.

Falls die Partikel extrahiert werden, verbleiben an dem ursprünglichen Ort der Partikel durch Luft oder Wasser gefüllte Hohlräume, welche untereinander durch Kugelkalotten verbunden sind und, bedingt durch das Orientierungsverfahren, kanalförmig die Membran durchziehen. Sie stehen mehr oder weniger senkrecht auf der Oberfläche der Membran.

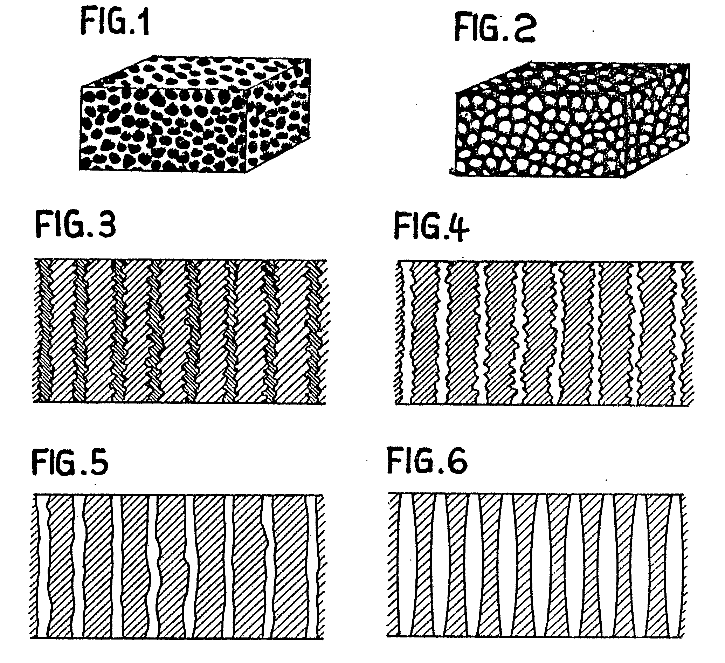

Unterlässt man bei der Membranherstellung Orientierungsvorgänge, so bleibt nach der Extraktion ein Film zurück mit einer Struktur, die einer hexagonal dichtesten Kugelpackung gleicht und unter dem Mikroskop einer offenzelligen Hartschaumfolie ähnelt. Dieser Film kann als Umkehr-Sinter-schicht bezeichnet werden, weil die Struktur der einer Sinterplatte entspricht, mit dem Unterschied, dass anstelle der dort vorliegenden festen Teilchen gleichförmige Hohlräume vorhanden sind, wie aus den Figuren 1 und 2 hervorgeht.

Die Filterleistung der sog. Umkehr-Sinterschicht lässt jedoch zu wünschen übrig. Weil ihre Struktur mehr einer Mikroschaumals einer Kapillarschicht gleicht, ist ihre Durchflussleistung — bezogen auf die Porenweite — als durchschnittlich zu bezeichnen. Um die Leistung anzuheben, ist es erforderlich, die Partikel im Substrat vor der Verfestigung so zu orientieren, dass sie Kapillar- oder Fliessstrukturen senkrecht zur Membranoberfläche bilden und diese zuletzt durch Aetzung freizulegen.

Die Strukturbildung ist auf verschiedenen Wegen möglich, beispielsweise:

a) Ausrichten der Partikel durch gezielte Streichvorgänge

Presst man eine durch ausgeprägtes strukturviskoses Fliessverhalten gekennzeichnete Bindemittel-Partikel-masse auf eine mittelporöse Stütz- oder Trägerschicht, so bilden sich durch laminare Fliessvorgänge in den relativ grobporigen Hohlräumen die gewünschten Kapillarstrukturen aus, die später herausgeätzt werden. Das strukturviskose (pseudoplastische) Verhalten der Beschichtungsmasse ist wichtig, damit die beim Einpressen sich bildende Perlkettenstruktur auch beim schliessenden Trockenvorgang erhalten bleibt.

b) Fließ ätzung obiger Schichten

Durch anschliessendes Aetzen mit einem anderen Mittel, das befähigt ist, den Kunststoff zu erodieren, ist es möglich, den Durchmesser der Kapillaren zu erweitern, zu glätten und auf ein gewünschtes Mass zu bringen. Wesentlich dabei ist eine gewisse Strömungsgeschwindigkeit während des Aetzvorganges. Dabei werden bevorzugt die vorstehenden, scharfkantigen dünnwandigen Blasenkanten abgetragen. Es ergibt sich eine, bessere Durchflussleistung bei nur unwesentlich vergrössertem Porendurchmesser (Figuren 3 bis 5).

c) Ausrichten der Partikel durch magnetische Kraftlinien

Unterwirft man eine ferro- oder paramagnetische Partikel enthaltende Kunststoffmasse derart einem magnetischen Feld, dass dessen Kraftlinien senkrecht zur Membranoberfläche stehen, so orientieren sich die Partikel unter Einschnürung zu Kapillarstrukturen. Wird das Magnetfeld während des Erhärtungsvorganges aufrechterhalten, bleiben diese Strukturen bestehen. Mit Eisen - oder Nickeldrahtpartikeln entstehen relativ grobporige, aber besonders glattwandige Strukturen (Fig. 6).

d) Ausrichten der Partikel durch elektrostatische Feldlinien

Legt man an eine dünne schicht einer leitfähigen Kunststofflösung Hochspannung an, so lassen sich entgegengesetzt aufgeladene Glasfaserteilchen einschiessen (beflocken) und später nach Erhärtung des Kunststoffes heraus-ätzen. Dieses Verfahren führt zu relativ groben, aber nahezu gleichgrossen und glatten Kapillaren. Feinporige, gleichmässige und glattwandige Kapillaren werden erhalten, wenn statt Glasfaserflock Hohlfaserflock verwendet wird. In diesem Fall erübrigt sich sogar, die Kapillaren durch Aetzen erst freizulegen. Voraussetzung ist, dass hochmolekulare Polymere als Bindemittel herangezogen werden, welche aufgrund ihrer Grösse nicht in die Hohlfaser einzudringen vermögen.

Die Partikel können im Prinzip feingemahlene, wasserlösliche Salze sein. Meist sind diese aber zu weich und weisen damit ein zu weites Korngrössen- und somit Porenweitenspektrum auf. Folglich sind die resultierenden Membranen für die vorgenannten Anwendungen ungenügend. Vorteilhafter ist es statt dessen, pyrogen gewonnenes Siliziumdioxid, Aluminiumoxid oder Titandioxid zu verwenden. Diese Stoffe sind feindispers mit annähernd kugelförmigen Teilchen, enger Korngrössenver-teilung, in definierten Korngrössen erhältlich und durch Flußsäure extrahierbar. Aber auch andere, durch Fällung oder Mahlung hergestellte Partikel (Füllstoffe) lassen sich verwenden. Von be-sonderer Bedeutung sind ferromagnetische Füll-stoffe wie Eisen-II/III-oxid, Eisenpulver, Nickel-pulver, Chrom-II/III-oxid.

Die hier beschriebenen Verfahren zur Strukturbildung sind zum Teil auch kombinierbar, beispielsweise die Fließätzung und die Streich-Fließlinienbildung

Ausrichten der Partikel durch gezielte Streichvorgänge.
Beispiel 1

22 Gew.% pyrogen gewonnenes Silizium-dioxid mit einem Korngrössenmaxi-mum von 50 nm werden in

66 Gew.% Zyklohexanon mittels hochtour-igem Rührwerk dispergiert. Dann werden

12 Gew.% Polyvinylchlorid-Pulver, K-Wert = 70 zugesetzt und

100 Gew.% homogenisiert. Die erhaltene Paste wird durch ein Metalldrahtnetz der Maschenweite = 0,06 mm ge-siebt und bei 10 Millibar Vakuum entlüftet.

Diese PVC-Paste wird auf eine handelsüb-liche Polyäthylensinterplatte mit der Poren-weite = 0,04 mm aufgebracht und mit einem Metallrakel vollständig abgeschabt. Die an die Oberfläche angrenzenden Hohlräume werden dadurch voll mit der Paste ausgefüllt. Die Trägerplatte wird anschliessend getrocknet und der Rakelvorgang noch dreimal wiederholt. Dadurch werden, wie vorgehend beschrieben, durch laminare Fließ vorgänge die Partikel ausgerichtet und es bilden sich in den Poren Kapillarstrukturen im fliessenden Kunststoff aus. Zur Kontrolle auf Dichtheit wird die Trägerplatte vor dem Aetzen in der Filtriervorrichtung mit Methylenblaulösung geprüft. Um die Eindringtiefe der Paste besser prüfen zu können ist es ratsam, diese zuvor mit wenig Pigmentfarbstoff (z.B. Kupfer—Phtalozyaninblau) an-zureiben. Anschliessend werden durch zwei-stündiges Aetzen mit 40%iger Flußsäure die Kapillaren freigelegt. Die gebrauchsfertige Membran besteht nun aus einer z.B. 2 mm starken Trägerschicht aus porosem Polyäthylen und einer einseitigen, festverankerten Feinfiltrationsschicht von 0,04—0,07 mm Stärke. Die Oberfläche der Feinfiltrationsschicht besteht zu 50—60% aus dichten Poly-äthylenpartikeln und zu 50—40% aus der eigentlichen Filtermasse. Ihre Filtrationsleistung gegenüber destilliertem Wasser beträgt bei 20°C 6,3—6,7 cm³/cm²·Std·bar. Hochrotes Goldsol (Teilchengrösse = 20—24 nm) wird vollständig abfiltriert. Dieses Sol eignet sich aufgrund seiner intensiven Färbung, seiner definierten Teilchengrösse und der kugelförmigen Partikel gut zur Kontrolle der fertigen Membran. Zum Vergleich passiert dieses Sol ein handelsübliches sog. Ultrafilter auf Kollodiumbasis und der Porenweite = 100 nm nahezu ungehindert.

Beispiel 2 Fließätzung
Die nach Beispiel 1 herstellte Membran wird eine Stunde lang beim 20° mit 10%iger wässriger Chromsäure durchgespült. Anschliessend wird mit destilliertem Wasser nachgewaschen und die Filtrationsleistung bestimmt. Diese liegt nun wesentlich höher. Das Verhalten gegenüber rotem Goldsol bleibt im Vergleich zu Beispiel 1 unverändert.

Ausrichten der Partikel durch magnetische
Kraftlinien
Beispiel 3

Handelsübliches Nickelpulver wird in Toluol suspendiert und durch Sedimentation wird eine Fraktion von 3—4$\mu$m Teilchengrösse abge-trennt. Diese wird getrocknet und für den anschliessenden Versuch verwendet.

Man löst 12g Phenoxyharz, Molgew. = 20.000 in 52g N,N'-Dimethylformamid, dispergiert darin 36g vom obigen Nickelpulver, trägt davon mit einem Rakel auf eine Polytetrafluoräthylen platte eine Schicht von 0,4 mm auf und setzt diese sofort auf die Stirnseite eines Permanent-Stabmagneten von 40 mm Durchmesser und ca. 1,3 Tesla.

Dort lässt man die Schicht 5 Stunden lang bei 50° trocknen, zieht sie von der Unterlage ab und entfernt die Nickelpartikel aus der Membran durch 4 stündiges Aetzen mit 20%iger Flußsäure, welche etwa 10% konzentriertes Wasserstoffperoxid enthält. Es wird eine 0,08 mm starke milchig-trübweisse Folie erhalten. Diese lässt unter dem Mikroskop in der glasigen Grundmasse senkrecht zur Oberfläche ausmündende Kanäle erkennen. Die Filtrationsleistung dieser Membran beträgt 60—70 cm³/cm²·Std·bar. Goldsol passiert diese Membran vollständig. 1%iger Polyvinylazetat-Dispersion mit der Teilchengrösse 0,5—2$\mu$m wird vollständig zurückgehalten, sog. "blankes" Filtrat.

### Beispiel 4

Handelsüblicher Nickeldraht von 40$\mu$m Stärke wird zu einem fasrigen Pulver von durchschnittlich 0,3 mm Stapellänge verarbeitet. Man löst 1g Phenoxyharz, Molgew. = 20.000 in 5g N,N'-Dimethylformamid, dispergiert darin 1g obiger Nickeldrahtpartikel und zieht von dieser Masse mit dem Rakel auf einer Polytetrafluoräthylenplatte eine 0,4 mm starke Schicht auf.

Unmittelbar darauf setzt man die Schicht auf die Stirnseite des vorerwähnten Stabmagneten (wobei sich die Partikel hochkant stellen) und lässt bei 50°C mehrere Stunden lang trocknen. Man zieht die so erhaltene samtartige Folie von der Unterlage ab und befreit sie zunächst durch Beizen mit 20%iger Chromsäure von der äusseren massiven Polymerschicht. Anschliessend wird, wie vorbeschrieben, mit Flußsäure und Wasserstoffperoxid der Partikelanteil entfernt. Die Durchgangsleistung lag bei annähernd 50.000 cm³ Wasser/cm²·Std·bar.

### Elektrostatisches Ausrichten der Partikel
### Beispiel 5

Handelsübliche Quarzfasern von 5$\mu$m Stärke werden in eine faserige Form von etwa 0,5 mm Stapellänge übergeführt. Auf eine hartverchromte Metallscheibe von 50 mm Durchmesser wird eine 20%ige Lösung von Polyphenylsulfon in N,N'-Dimethylformamid in einer 0,4 mm dicken Schicht aufgebracht. Mit einem dazu geeigneten Gerät werden die Partikel bei 30.000 Volt Potentialdifferenz in die auf der Hartchromscheibe befindliche Polymerlösung eingebracht.

Anschliessend wird mit einem Infrarotgerät getrocknet. Die samtartige Schicht lässt sich durch Einlegen in netzmittelhaltiges Wasser leicht von der Metallplatte abtrennen. Nach zweistündiger Einwirkung von 40%iger Flusssäure sind die Poren vollständig freigelegt. Die Membran zeigt unter dem Mikroskop vollkommen gleichmässige, gleichgrosse Poren mit meniskusförmigem Kragen. Es wurde eine Durchflussleistung von annähernd 1.200 cm³/cm²·Std·bar erhalten.

### Elektrostatisches Ausrichten von Hohlfasern
### Beispiel 6

Ausgangsmaterial für die Hohlfasern ist ein für die Fabrikation von sog. Vollglasthermometern verwendetes Borosilikatglasrohr von 7 mm Aussen- und 0,4 mm Innendurchmesser. Es wird senkrecht hängend in ein auf 1.400°C beheiztes Keramikrohr von 20 mm Innendurchmesser und 150 mm Länge eingeführt und als endlose Hohlfaser nach unten über Gummiquetschwalzen abgezogen. Es lassen sich relativ leicht Fasern mit einem konstanten Querschnitt von 25$\mu$m und einer Lichtweite von ĉa. 1,5$\mu$m erreichen. Man führt sie in Hohlfasermehl von etwa 0,5 mm Stapellänge über. Dieses Mehl bewahrt man in dünner Schicht isotherm in einem Exsikkator bei 80° über einer hochsiedenden Kerosinfraktion auf. Man erreicht so, dass sich die Kapillaren mit Kerosin füllen und beim anschliessenden Beflockungsvorgang nicht von der Polymerlösung verstopft werden.

Das Hohlfasermehl wird wie im Beispiel 5 beschrieben in 25%ige Phenoxiharzlösung in Dimethylformamid eingebracht (0,4 mm starke Schicht), getrocknet, bei 90°C mehrere Stunden lang getempert und dann werden durch Abbeizen mit 20%iger Chromsäure die Kapillarmündungen freigelegt. Man erhält eine samtartig glänzende Folie von etwa 0,15 mm Stärke und mit etwa 0,5 mm langen hochkant eingelagerten Kapillaren. Die Durchflussleistung beträgt etwa 350 cm³/cm²·Std·bar.

Die Membran ist bei 150° heiss sterilisierbar, ohne dass sich ihr Durchflussverhalten dadurch ändert.

Geeignete Partikel sind pyrogen gewonnenes Siliziumdioxid sowie Aluminiumoxid, Titandioxid, Zinkoxid sowie wässrig gefällte Partikel von Aluminiumhydroxid, Berylliumhydroxid und Zirkonhydroxid mit einem Korngrössenmaximum von 7 nm—50 nm.

Brauchbare magnetisierbare Partikel können aus Magnetit, Eisensulfid, Eisenoxid, Chromit sowie Eisen-Nickel-Cobalt-Metall oder aus den Heuslerschen Legierungen sein.

Als Bindemittel können Vorstufen von Epoxidharzen, Acrylharzen, Phenolformaldehydharzen, Silikonharzen, Polyesterharzen sowie die Polymere PVC, Polyvinylidenfluorid (PVDF), Polyacrylnitril (PAN), PAN-Mischpolymere, Polyamide, Phenoxyharze und Polyphenylsulfon verwendet werden. Die nach obigem Verfahren hergestellte Membran kann eine beliebige Form aufweisen, das heisst, als ebene Schicht oder rohroder topfförmig ausgebildet sein.

### Patentansprüche

1. Verfahren zur Herstellung einer mikroporösen Membran für Filtrationsanlagen, wobei in einem Kunststoff oder Kunststoffvorprodukt feinteilige, darin unlösliche Partikel eingemischt werden, dadurch gekennzeichnet, dass diese Mischung im fliessfähigen Zustand zu einer dünnen Schicht geformt wird und die Partikel im wesentlichen senkrecht zur Schichtoberfläche ausgerichtet werden und dass nach dem Verfestigen der Schicht die Partikel unter Bildung einer Fliessstruktur mit kanalförmigen Hohlräumen herausgelöst werden.

2. Verfahren zur Herstellung einer mikroporösen Membran für Filtrationsanlagen, wobei in einem Kunststoff oder Kunststoffvorprodukt feinteilige, darin unlösliche Partikel eingemischt werden, dadurch gekennzeichnet, dass diese Mischung im fliessfähigen Zustand zu einer dünnen Schicht geformt wird und die aus Hohlfasern bestehenden Partikel im wesentlichen senkrecht zur Schichtoberfläche ausgerichtet werden und dass nach dem Verfestigen der Schicht die Partikel eine Fliessstruktur mit kanalförmigen Hohlräumen bilden.

3. Verfahren nach Anspruch 1, dadurch gekennzeichnet, dass der Kunststoff oder das Kunststoffvorprodukt mit den darin unlöslichen, eingemischten Partikeln zur Ausrichtung mittels eines Rakels auf eine grobporöse Stützmembran aufgetragen wird.

4. Verfahren nach Anspruch 3, dadurch gekennzeichnet, dass die Membran anschliessend noch einer Fliessätzung unterworfen wird.

5. Verfahren nach Anspruch 1, dadurch gekennzeichnet, dass die eingemischten Partikel durch ein Magnetfeld ausgerichtet werden.

6. Verfahren nach Anspruch 1, dadurch gekennzeichnet, dass die eingemischten Partikel in einem elektrostatischen Feld ausgerichtet werden.

7. Verfahren nach Anspruch 2, dadurch gekennzeichnet, dass Hohlfasern aus Glas im elektrostatischen Feld ausgerichtet werden,

8. Verfahren nach Anspruch 7, dadurch gekennzeichnet dass anschliessend die Kapillaröffnungen der Fasern mittels wässriger Chromsäure freigelegt werden.

9. Verfahren nach Anspruch 6, dadurch gekennzeichnet, dass als Partikel Quarzfasern verwendet werden, die nach dem Verfestigen mittels Flusssäure herausgelöst werden.

10. Verfahren nach einem der Ansprüche 1, 3 oder 4, dadurch gekennzeichnet, dass Partikel aus pyrogen gewonnenem Siliziumdioxid, Aluminiumoxid, Titandioxid, Zinkoxid, oder wässrig gefällte Partikel aus Aluminium-, Beryllium- oder Zirkonhydroxyd verwendet werden.

11. Verfahren nach Anspruch 10, dadurch gekennzeichnet, dass Partikel mit einer Korngrösse vom 7 nm bis 50 nm verwendet werden.

12. Verfahren nach Anspruch 5, dadurch gekennzeichnet, dass faserförmige Partikel aus Magnetit, Eisensulfid, Eisenoxid, Chromit, Eisen-Nickel-Kobalt-Metall oder Heuslerscher Legierung verwendet werden.

**Claims**

1. A method for production of a micro-porous membrane for filtration plants, whereby finely divided particles are mixed in a plastics material of preliminary plastics material product and are insoluble therein, characterized in that the particle-containing material is formed into a thin layer whilst in a fluid state and the particles are aligned substantially normal to the surface of said layer and that after solidification of said layer the particles are extracted by building a flow structure with channel-like hollow spaces.

2. A method for production of a micro-porous membrane for filtration plants, whereby finely divided particles are mixed in a plastics material or preliminary plastics material product and are insoluble therein, characterized in that the particle-containing material is formed into a thin layer whilst in a fluid state and the particles consisting of hollow glass fibers are aligned substantially normal to the surface of said layer and that after solidification of said layer the particles are building a flow structure with channel-like hollow spaces.

3. The method of claim 1, characterized in that the plastics material or preliminary plastics material with the mixed, therein insoluble particles is applied to a coarse-porous support membrane by means of a doctor.

4. The method of Claim 3, characterized in that the membrane is subsequently submitted to a flow-etching.

5. The method of Claim 1, characterized in that the mixed-in particles are aligned by a magnetic field.

6. The method of Claim 1, characterized in that the mixed-in particles are aligned by an electrostatic field.

7. The method of Claim 2, characterized in that the hollow glass fibers are aligned in the electrostatic field.

8. The method of Claim 7, characterized in that the capillary openings of said fibers are subsequently laid bare by aqueous chromic acid.

9. The method of Claim 6, characterized in that as particles quarz fibers are used, which, after solidification, are extracted by hydrofluoric acid.

10. The method of one of the Claims 1, 3 or 4, characterized in that particles which are pyrogenically obtained silicon dioxide, aluminium oxide, titanium dioxide, zinc oxide or aqueously precipitated particles of aluminium-, beryllium-, or zirconium hydroxide are used.

11. The method of Claim 10, characterized in that particles with a grain size of from 7 nm to 50 nm are used.

12. The method of Claim 5, characterized in that fiber-like particles of magnetite, iron sulfide, iron oxide, chromite, iron-nickel-cobalt-metal or of Heusler's alloy are used.

**Revendications**

1. Procédé pour la fabrication d'une membrane microporeuse pour des installations de filtration, dans lequel des particules finement divisées sont mélangées dans une matière synthétique ou une matière synthétique préliminaire, lesdites particules étant insolubles dans lesdites matières, caractérisé en ce que ledit mélange est façonné à l'état fluide en forme d'une couche mince, que lesdites particules sont alignées en substance perpendiculairement à la surface de ladite couche et par le fait qu'après solidification de la couche, les particules sont dissoutes pour produire une structure d'écoulement avec des espaces vides en forme de canaux.

2. Procédé pour la fabrication d'une membrane microporeuse pour des installations de filtration dans lequel des particules finement divisées sont mélangées dans une matière synthétique ou une matière synthétique préliminaire, lesdites particules étant insolubles dans lesdites matières, caractérisé en ce que ledit mélange est façonné à l'état fluide en forme d'une couche mince, que lesdites particules constituées par des fibres creuses sont alignées en substance perpendiculairement à la surface de ladite couche et par le fait qu'après solidification de la couche, les particules forment une structure d'écoulement avec des espaces vides en forme de canaux.

3. Procédé selon la revendication 1, caractérisé par le fait que la matière synthétique ou la matière synthétique préliminaire mélangée des particules insolubles est déposée sur une membrane-support à pores grossiers pour permettre l'alignement desdites particules à l'aide d'un racloir.

4. Procédé selon la revendication 3, caractérisé par le fait que la membrane est ensuite soumise à une action de lavage avec un agent corrosif.

5. Procédé selon la revendication 1, caractérise par le fait que les particules du mélange sont alignées par un champ magnétique.

6. Procédé selon la revendication 1, caractérisé par le fait que les particules du mélange sont alignées par un champ électrostatique.

7. Procédé selon la revendication 2, caractérisé par le fait que des fibres creuses sont en verre et qu'elles sont alignées par un champ électrostatique.

8. Procédé selon la revendication 7, caractérisé par le fait que les ouvertures capillaires des fibres sont ensuite dégagées au moyen d'acide chromique aqueux.

9. Procédé selon la revendication 6, caractérisé par le fait que des particules sont constituées de fibres de quartz et dissoutes après ladite solidification par un acide fluorhydrique sont utilisées.

10. Procédé selon l'une des revendications 1, 3 ou 4, caractérisé par le fait que des particules obtenues par pyrogénation de dioxyde de silicium, dioxyde d'aluminium, dioxyde de titane ou sont constituées d'hydroxydes aqueux d'aluminium, beryllium ou zirconium sont utilisées.

11. Procédé selon la revendication 10, caractérisé par le fait que lesdites particules ont une grosseur de grain de 7 nm à 50 nm.

12. Procédé selon le revendication 5, caractérisé par le fait que des particules fibreuses en magnétite, sulfure ferreux, oxyde ferrique, chromate de fer, alliage métallique de fer-nickel-cobalt ou de Heusler sont utilisées.

FIG.1

FIG.2

FIG.3

FIG.4

FIG.5

FIG.6